Europäisches Patentamt

European Patent Office

Office européen des brevets

(19)

(11) EP 0 813 096 A1

(12) **EUROPÄISCHE PATENTANMELDUNG**

(43) Veröffentlichungstag:
17.12.1997 Patentblatt 1997/51

(51) Int Cl.6: **G02F 1/141**

(21) Anmeldenummer: 97810357.0

(22) Anmeldetag: 09.06.1997

(84) Benannte Vertragsstaaten:
AT BE CH DE DK ES FI FR GB GR IE IT LI LU MC
NL PT SE

(30) Priorität: 12.06.1996 CH 1468/96

(71) Anmelder: Rolic AG
6301 Zug (CH)

(72) Erfinder:
- Fünfschilling, Jürg, Prof. Dr.
  4054 Basel (CH)
- Schadt, Martin, Dr.
  4411 Seltisberg (CH)

(74) Vertreter: Eder, Carl E.
Patentanwaltsbüro EDER AG
Lindenhofstrasse 40
4052 Basel (CH)

(54) **Flüssigkristalline Anzeige-, Schalt- oder Bildverarbeitungsvorrichtung**

(57) Die kommerzielle Herstellung von DHF-Zellen, insbesondere farbigen DHF-Anzeigezelle, hat sich bis heute kaum durchgesetzt. Dies insbesondere deshalb, weil solche Zellen aufgrund des bekannten Standes der Technik zweckmässigerweise eine Flüssigkristallschicht mit einer Dicke d von etwa 1,4 bis 2,8 µm besitzen müssen, was ein kostspieliges und komplexes Herstellungsverfahren voraussetzt. Ausgehend von der Erkenntnis, dass der Mittelwert des Brechungsindexes einer DHF-Anzeige mit dem einer doppelbrechenden Platte beschrieben werden kann, wurde nun festgestellt, dass sich insbesondere für DHF-Anzeigen mit einem grossen Schaltwinkel a der Betrag der Doppelbrechung $\Delta n$ innerhalb eines für DHF-Zellen typischen Spannungsbereiches signifikant ändert. Die vorliegende Erfindung beinhaltet daher die Verwertung dieses zweiten Effektes der Spannungsabhängigkeit von $\Delta n$, mit dem Ziel, die Herstellung von DHF-Anzeigen wesentlich zu erleichtern.

Fig. 3

**Beschreibung**

Die Erfindung betrifft eine flüssigkristalline Anzeige-, Schalt- oder Bildverarbeitungsvorrichtung mit einer eine ferroelektrische, chiral-smektische Flüssigkristallschicht enthaltenden Zelle, nämlich eine Vorrichtung gemäss dem Oberbegriff des Anspruchs 1.

Die Zelle besitzt dabei insbesondere eine doppelbrechende, nachfolgend auch als $S_c^*$-Schicht bezeichnete, Flüssigkristallschicht, deren helikale Konfiguration durch Einwirkung eines elektrischen Feldes so beeinflusst werden kann, dass sich die optische Anisotropie des Flüssigkristalls ändert.

Die Deformation der Kristallkonfiguration durch ein elektrisches Feld ist zum Beispiel in «Advances in Liquid Crystal Research and Applications, Oxford/Budapest, 1980, Seite 469ff" beschrieben und wird in der Literatur gelegentlich mit der Bezeichnung DHF (für Deformed Helix Ferroelectric) abgekürzt.

Die Erfindung hat unter anderem ein Direktsicht-Display und ein Projektions-Display zum Gegenstand, also eine Anzeigevorrichtung mit einer Flüssigkristall-Anzeigezelle.

Eine bekannte Flüssigkristall-Anzeigezelle basierend auf der Deformation einer helikalen Flüssigkristallkonfiguration ist aus der EP-B-0 309 774 bekannt. So besitzt die aus dieser Vorveröffentlichung bekannte, auch als DHF-Zelle bezeichnete, Anzeigezelle ein Paar transparenter Platten, die zusammen die $S_c^*$-Schicht einschliessen, mit je einer die Moleküle der $S_c^*$-Schicht ausrichtenden Oberflächenstruktur, mit Elektroden zur Erzeugung eines elektrischen Feldes im Flüssigkristall und je einem Polarisator versehen sind.

Die der $S_c^*$-Schicht zugewandten Oberflächenstrukturen üben auf die abgrenzenden Flüssigkristallmoleküle eine Richtwirkung aus. Die für DHF-Zellen verwendbaren Flüssigkristalle bestehen vorzugsweise aus einer Mischung von verschiedenen chemischen Verbindungen und zeichnen sich dadurch aus, dass die zu einer smektischen Schicht gehörenden, zueinander im wesentlichen parallel angeordneten Moleküle nicht senkrecht zur smektischen Ebene, sondern unter einem smektischen Kippwinkel $\theta$ zur Ebenen-Normalen angeordnet sind. Die Chiralität der $S_c^*$-Schicht führt zusätzlich dazu, dass die Achsen der Flüssigkristallmoleküle von Schicht zu Schicht gegeneinander verdreht sind, so dass sich dadurch eine schraubenförmige Helix mit der Ganghöhe p bildet.

Im Ruhezustand, d.h. ohne angelegtes elektrisches Feld, zeigt die DHF-Zelle eine bestimmte Lichtdurchlässigkeit. Wird an den Elektroden eine Spannung angelegt, so entsteht in der $S_c^*$-Schicht ein elektrisches Feld, das eine Umorientierung der Moleküle und somit eine Umorientierung der einzelnen smektischen Schichten bewirkt. Durch Anlegen der Spannung wird also die Helix der $S_c^*$-Schicht deformiert, was eine Änderung der Lichtdurchlässigkeit zur Folge hat.

Dieser der DHF-Anzeige zugrunde liegende elektrooptische Effekt ist dem Fachmann bekannt. Man geht dabei von einer Flüssigkristallkonfiguration aus, die eine kurze Ganghöhe p aufweist. Die Ganghöhe p ist dabei so gewählt, dass das Licht über die Windungen der Helix mittelt, d.h. nur einen gemittelten Brechungsindex erfährt. Für eine ungestörte Helix erhält man so eine doppelbrechende Schicht mit einer zur Helixachse parallelen optischen Achse. Wird eine Spannung zwischen den Elektroden der beiden Platten angelegt, so wirken Drehmomente auf die einzelnen smektischen Schichten. Diese Drehmomente bewirken die genannte Deformation der Helix und dadurch auch eine Rotation der optischen Achse in einer zu den die Flüssigkristallschicht begrenzenden Platten parallelen Ebene. Die Rotation der optischen Achse in Abhängigkeit von der angelegten Spannung lässt sich in der Praxis durch den Schaltwinkel $\alpha(U)$ bestimmen. Der maximale Schaltwinkel $\alpha(U=U_{max})$ ist dabei ein charakteristisches Merkmal der DHF-Zelle und entspricht dem Drehwinkel der optischen Achse zwischen den Spannungszuständen U=0 und U=|U_{max}|.

Bei bekannten DHF-Zellen wird davon ausgegangen, dass diese Schwarz/Weiss-Anzeigen mit sich kontinuierlich ändernden Graustufen erzeugen. Werden nun aber die je einen Bildpunkt definierenden Elektrodensegmente in drei Unterelektroden aufgeteilt und mit geeigneten Farbfiltern für die Farben Rot, Grün und Blau versehen, lassen sich in bekannter Art und Weise farbige DHF-Anzeigen erzeugen, bei welchen die roten, grünen und blauen Farbpunkte dann mittels einer Spannungsquelle von dunkel bis maximal hell angesteuert werden können.

Die kommerzielle Herstellung sowohl von Schwarz/Weiss- als auch farbigen DHF-Anzeigen hat sich bis heute kaum durchgesetzt. Dies insbesondere deshalb, weil die dazu notwendigen DHF-Zellen aufgrund des bekannten Standes der Technik zweckmässigerweise eine Flüssigkristallschicht mit der Dicke d von etwa 1,4 bis 2,8 μm besitzen müssen, was ein kostspieliges und komplexes Herstellungsverfahren voraussetzt.

Der Erfindung liegt nun die Aufgabe zugrunde, eine Anzeige- oder Bildverarbeitungsvorrichtung mit einer DHF-Zelle bereitzustellen, welche ihrerseits eine Flüssigkristallschicht besitzt, die dicker ist als diejenige von bekannten DHF-Zellen.

Diese Aufgabe wird erfindungsgemässe durch eine flüssigkristalline Anzeige- oder Bildverarbeitungsvorrichtung mit den Merkmalen des Anspruchs 1 gelöst.

Die Lösung der erfindungsgemässen Aufgabe beruht u.a. auf Modellrechnungen und Experimenten, welche gezeigt haben, dass der Mittelwert des Brechungsindexes einer DHF-Anzeige mit dem einer doppelbrechenden Platte beschrieben werden kann, so dass sich beim Anlegen einer Spannung an die Elektroden der DHF-Zelle nicht nur die optische Achse dreht, sondern auch der Betrag der Doppelbrechung $\Delta n$ ändert.

Ausgehend von der Erkenntnis, dass der Mittelwert des Brechungsindexes einer DHF-Anzeige mit dem einer doppelbrechenden Platte beschrieben werden kann, hat man ferner festgestellt, dass sich insbesondere für DHF-Anzeigen mit einem grossen Schaltwinkel $\alpha$ der Betrag der Doppelbrechung $\Delta n$ innerhalb eines für DHF-Zellen typischen Spannungsbereiches siqnifikant ändert. Der vorliegenden Erfindung liegt daher die Verwertung dieses zweiten Effektes der Spannungsabhängigkeit von $\Delta n$ zugrunde, mit dem Ziel, die Herstellung von DHF-Zellen wesentlich zu erleichtern.

Vorteilhafte Ausführungsformen der Erfindung gehen aus den abhängigen Ansprüchen hervor.

Im folgenden wird anhand der beiliegenden Zeichnung die Erfindung näher beschrieben. Es zeigen

die Figur 1 eine schematische Darstellung der $S_c^*$-Phase einer DHF-Zelle,

die Figur 2 eine vergrösserte schematische Darstellung einer einzelnen smektischen Schicht der in der Figur 1 dargestellten $S_c^*$-Phase,

die Figur 3 einen schematischen Schnitt durch eine DHF-Zelle,

die Figur 4 eine vereinfachte, perspektivische Ansicht des in der Figur 3 dargestellten Ausschnittes einer DHF-Zelle,

die Figur 5 eine graphische Darstellung der Abhängigkeit des Schaltwinkels $\alpha$ von dem Teil der auf die Elektroden geflossenen Ladung Q, der durch die Deformation der Helix influenziert wird,

die Figur 6 eine graphische Darstellung von $\Delta n$ in Abhängigkeit von dem Teil der auf die Elektroden geflossenen Ladung Q, der durch die Deformation der Helix influenziert wird,

die Figur 7 eine schematische Darstellung eines Bildpunktes einer farbigen DHF-Zelle,

die Figur 8 einen schematischen Schnitt durch eine reflektierende DHF-Anzeigezelle,

die Figur 9 ein Funktionsschema eines Projekions-Displays, und

die Figur 10 die Lichttransmission T einer «Negativ-Kontrast"-DHF-Zelle in Abhängigkeit von der Spannung, und zwar für die Farben Rot, Grün und Blau.

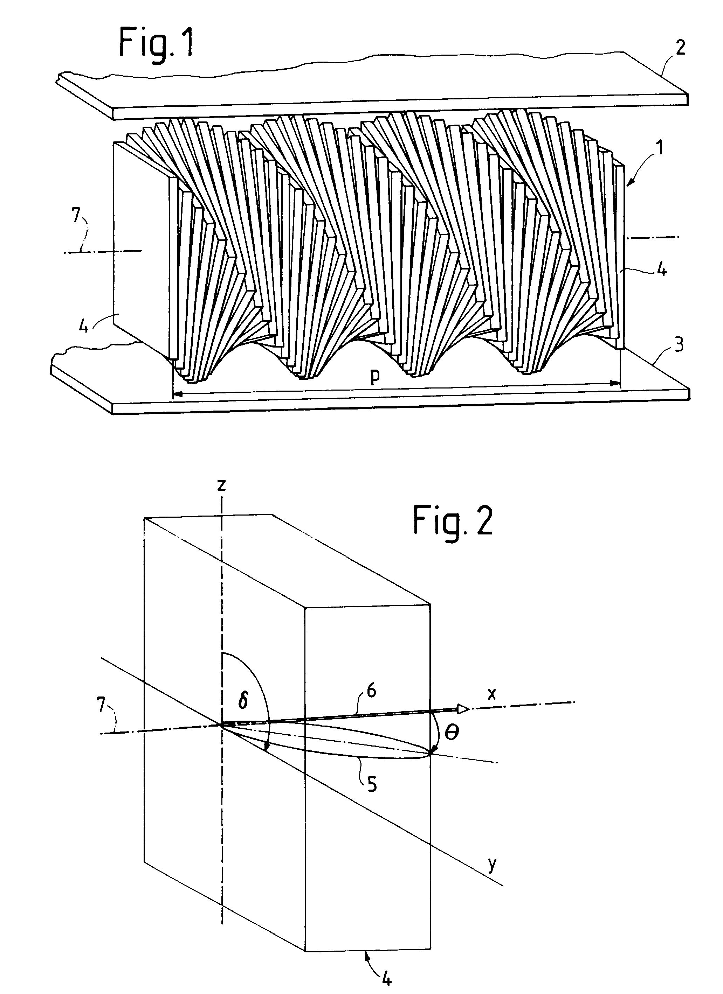

Eine wichtige Rolle für die Eigenschaft einer DHF-Anzeige spielt der Kippwinkel $\theta$ der $S_c^*$-Phase. Diese lässt sich mit Hilfe der Figuren 1 und 2 erklären. So zeigt die Figur 1 die helikale Flüssigkristallkonfiguration 1 einer $S_c^*$-Schicht, die ihrerseits von einer oberen und unteren Glasplatte 2 bzw. 3 begrenzt ist. Die smektischen Schichten 4 der Flüssigkristallkonfiguration 1 stehen senkrecht zu den Platten 2 und 3 und sind - wie eingangs bereits erwähnt - gegeneinander verdreht. Wie aus der Figur 2 ersichtlich ist, sind die zueinander parallel angeordneten Moleküle 5 jeder Schicht 4 um den im gezeichneten Beispiel in der X-Y-Ebene liegenden Kippwinkel $\theta$ gegen die Ebenen-Normale 6 bzw. gegen die zu den Platten 2 und 3 parallele Helixachse 7 geneigt. Zur vollständigen Charakterisierung der Konfiguration dient noch der in der Y-Z-Ebene liegende Winkel $\delta$. Für chiral-smektische Phasen ist dieser Winkel $\delta$ nicht konstant, sondern nimmt von Schicht zu Schicht zu. Wenn man daher in x-Richtung der Ebenen-Normalen 6 folgt, bewegen sich die Moleküle 5 der einzelnen Schichten 4 auf einem Kegel und bilden so die genannte Helix.

Die Flüssigkristallmischung wird in bekannter Weise mit chiralen Dotierstoffen versetzt, so dass die Ganghöhe p der dadurch induzierten helikalen Konfiguration kleiner ist als die Wellenlänge von sichtbarem Licht, also kleiner als etwa 500 nm. Dadurch mittelt das Licht über diese Konfiguration. Für die undeformierte Helix führt dies zu einer doppelbrechenden Schicht mit einer - wie bereits erwähnt - zur Helixachse 7 parallelen optischen Achse.

Bevor nun die mit einer erfindungsgemässen DHF-Zelle erzeugbaren elektrooptischen Effekte die im wesentlichen auf der zusätzlichen Spannungsabhängigkeit von $\Delta n$ basieren - anhand eines Ausführungsbeispieles erläutert werden, wird der allgemeine Aufbau einer für den Einbau in ein Direktsicht-Display bestimmten, farbigen DHF-Zelle näher beschrieben. Dem nachfolgend im Detail beschriebenen ersten Ausführungsbeispiel liegt dabei ebenfalls ein solcher Zellen-Aufbau zugrunde.

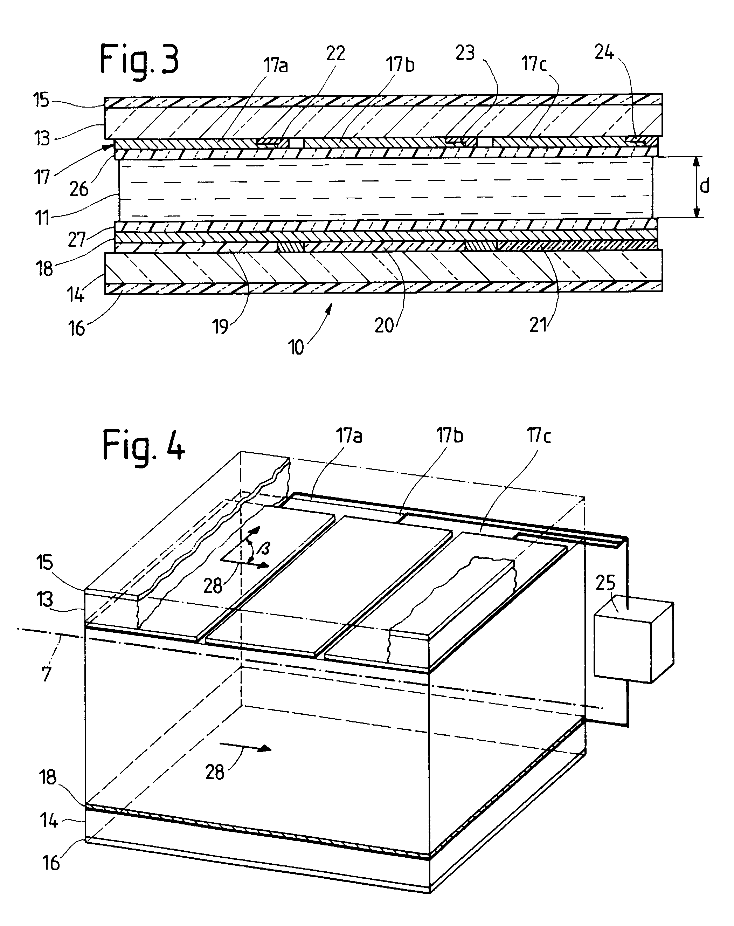

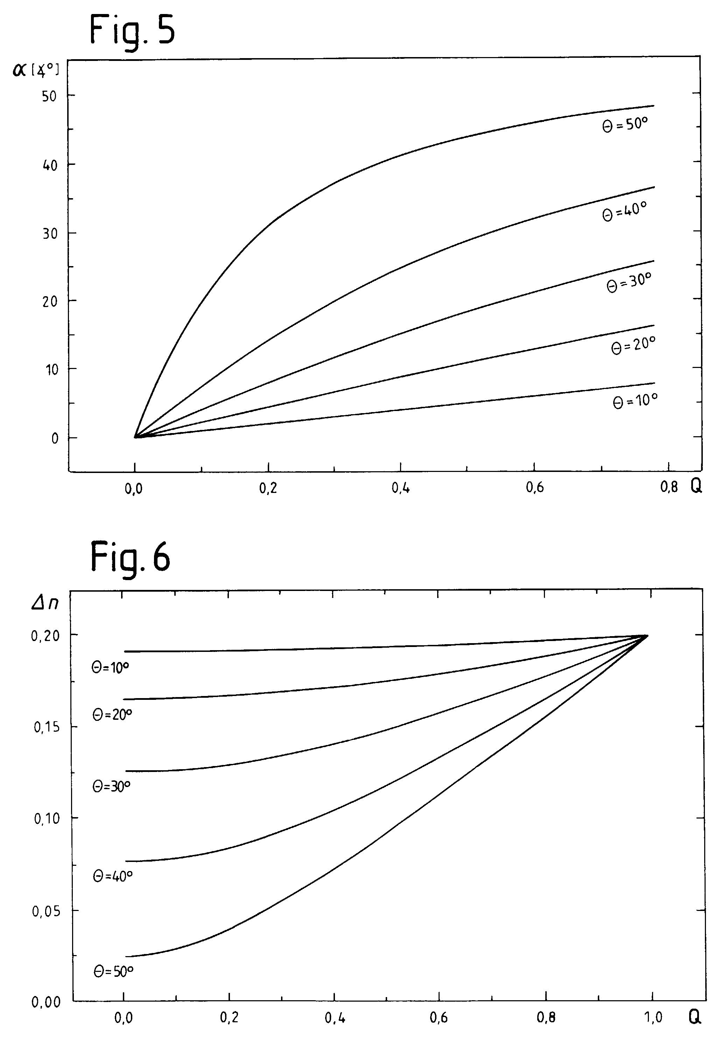

Die in den Figuren 3 und 4 dargestellte und als ganzes mit 10 bezeichnete DHF-Zelle besitzt eine $S_c^*$-Schicht 11 mit einer Schichtdicke d, die zwischen zwei zueinander parallelen Platten 13 und 14 aus durchsichtigem Material, zum Beispiel Glas oder Acrylglas, angeordnet ist. Da es sich bei dieser DHF-Zelle um eine Direktsichtanzeige-Zelle handelt, ist ferner die vom Licht innerhalb des Flüssigkristalls zurückzulegenden Strecke $d_{eff}$ gleich der Schichtdicke d.

Auf der Aussenseite der oberen Platte 13 befindet sich ein Polarisator 15, der vorzugsweise mit der Platte 13 verbunden, beispielsweise auf dieser aufgeklebt ist. Entsprechend ist der unteren Platte 14 in analoger Weise ein Polarisator 16 zugeordnet.

Auf ihren der Flüssigkristallschicht 11 zugewandten Oberflächen weisen die Platten 13 und 14 durchsichtige Elektroden 17 und 18 auf, welche die üblichen, zur Darstellung von Zeichen oder Bildpunkten bestimmten Elektrodensegmente bilden, wobei auf dem hier dargestellten Ausschnitt aus einer DHF-Zelle lediglich die Elemente eines einzelnen Elektrodensegmentes gezeichnet sind. So ist der obere Abschnitt der Elektrode 17 in drei Unterelektroden 17a, 17b und 17c aufgeteilt und der gegenüberliegende Abschnitt der Elektrode 18, der gegebenenfalls auch segmentiert sein kann, mit den einzelnen Unterelektroden 17a, 17b und 17c zugeordneten Farbfiltern 19, 20 und 21 versehen. Zu jeder Unterelektrode 17a, 17b und 17c gehören noch elektronische Bauteile 22, 23 und 24, wie etwa Dünnfilmtransistoren und dergleichen. Letztere bilden zusammen mit einer Treiberelektronik 25, mit welcher die den Grundfarben zugeordneten Unterelektroden 17a, 17b und 17c unabhängig voneinander angesteuert werden können, die im Oberbegriff des Anspruchs 1 genannten elektronischen Steuermittel.

Die der $S_c^*$-Schicht zugewandten Oberflächen der Glasplatten 13 und 14 sind zudem so behandelt, dass sie auf die angrenzenden Flüssigkristallmoleküle und somit auf die gesamte Flüssigkristallschicht eine Richtwirkung ausüben und damit die Richtung des Direktors bestimmen. Diese Behandlung besteht beispielsweise im Beschichten mit einer Polymerschicht und im Reiben der Oberflächen in einer Richtung. Andere Möglichkeiten sind das Schrägaufdampfen orientierender Schichten. Solche Schichten sind in der Figur 3 dargestellt und mit 26 und 27 bezeichnet. Das Ergebnis solcher Behandlungen wird nachfolgend auch als Oberflächenorientierung bezeichnet. Die Oberflächenorientierung auf den beiden Platten 13 und 14 ist durch die Pfeile 28 dargestellt, wobei die Oberflächenorientierung der oberen Platte 13 zu der der unteren Platte 14 parallel ist.

Der zur oberen Platte 13 gehörende Polarisator 15 ist so angeordnet, dass seine Polarisationsrichtung mit der Richtung der Oberflächenorientierung bzw. mit der Helixachse 7 einen Winkel β einschliesst. Demgegenüber ist der zur unteren Platte 14 gehörende Polarisator 16 vorzugsweise so angeordnet, dass seine Polarisationsrichtung gegen diejenige des oberen Polarisators 15 um einen Winkel von 90° gedreht ist. Diese Ausrichtung der Polarisatoren 15 und 16 stellt ein bevorzugtes Ausführungsbeispiel dar. Es sind durchaus auch andere Polarisator-Anordnungen möglich, mit denen ebenfalls gute Ergebnisse erzielbar sind. Solche lassen sich dabei ohne weiteres durch einfaches Optimieren bestimmen.

Modellrechnungen und Experimente haben nun - wie bereits erwähnt - gezeigt, dass der Mittelwert des Brechungsindexes einer DHF-Anzeige mit dem einer doppelbrechenden Platte beschrieben werden kann, so dass sich beim Anlegen einer Spannung an die Elektroden der DHF-Zelle nicht nur die optische Achse dreht, sondern auch der Betrag der Doppelbrechung Δn ändert.

Die Figur 5 zeigt schematisch Resultate von solchen Modellrechnungen für den Schaltwinkel α, und zwar in Abhängigkeit von dem Teil der auf die Elektroden geflossenen Ladung Q, der durch die Deformation der Helix influenziert wird. Die Figur 6 zeigt ferner die dazu gehörenden Resultate der ebenfalls mit Q verknüpften Doppelbrechung Δn. Wie man sieht, steigt der Schaltwinkel α recht gut linear mit Q an. Dies gilt insbesondere für Kippwinkel θ, die kleiner als etwa 30° sind. In diesem Kippwinkelbereich ist auch die Doppelbrechung Δn nur geringfügig von der Ladung Q und somit auch nur geringfügig von der angelegten Spannung abhängig. Für grössere Kippwinkel θ ändern sich beide Verhalten: So ist bei grösserem Kippwinkel θ der Schaltwinkel α nicht linear zu Q und Δn wird klein für Q=0, und damit auch für U=0.

Die Lichttransmission T einer doppelbrechenden und zur Direktsicht bestimmten Flüssigkristallschicht zwischen zwei rechtwinklig gekreuzten Polarisatoren ist nun gemäss der Gleichung (1) proportional zum Produkt aus einem winkelabhängigen und einem doppelbrechungsabhängigen Faktor.

$$T \sim \sin^2(2\gamma) \cdot \sin^2(\pi \cdot \Delta n \cdot d / \lambda) \tag{1}$$

In der gleichung (1) ist γ der Winkel der optischen Achse zu einer der beiden Polarisationsrichtungen, Δn der Betrag der Doppelbrechung, d die Dicke der Flüssigkristallschicht und λ die Wellenlänge des Lichtes. Die Transmission T hängt also sowohl von der Richtung der optischen Achse der doppelbrechenden Flüssigkristallschicht in Bezug auf eine Polarisationsrichtung als auch vom Betrag der Doppelbrechung Δn ab. Das Zeichen „~" steht hier und im folgenden für „proportional zu". In einer DHF-Anzeige sind sowohl γ als auch Δn abhängig von der angelegten Spannung U; es gilt also $\gamma=f_1(U)$ und $\Delta n=f_2(U)$. Wegen der Dispersion ist Δn darüber hinaus auch noch von der Wellenlänge λ abhängig, so dass für die Doppelbrechung vollständigerweise gilt: $\Delta n=f_2(U,\lambda)$.

In der optisch symmetrischen Betriebsart bekannter DHF-Direktsicht-Anzeigen ist β=0, d.h. die Helixachse 7 liegt parallel zur Polarisationsrichtung eines Polarisators. Die Transmission T gemäss Gleichung (1) ist also auch Null für U=0, da γ im Ruhezustand der DHF-Zelle ebenfalls Null ist. Für |U| > 0 steigt die Transmission T wegen des Faktors $\sin^2(2\gamma)$ an, und zwar soweit bis der Maximalwert von γ erreicht ist. Dieser Maximalwert ist immer kleiner als der Kippwinkel θ. Da sich die Helix bei höheren Spannungen aufwindet, erreicht 2γ auch für einen relativ grossen Kippwinkel von 35° nur etwa 60°. Die Transmission T wird also durch den Faktor $\sin^2(2\gamma)$ dominiert. Wie Figur 6 zeigt, ist der zweite Faktor $\sin^2(\pi \cdot \Delta n \cdot d / \lambda)$ für kleine Kippwinkel und kleine Schaltwinkel wenig spannungsabhängig und kann daher durch geeignete Wahl der Flüssigkristall-Schichtdicke d optimiert werden. So wird für eine farbige DHF-Zelle bekannter Bauart der Faktor $\Delta n \cdot d / \lambda$ zweckmässigerweise so eingestellt, dass bei maximaler Spannung und bei $\lambda = 560$nm folgendes gilt:

$$\Delta n \cdot d / \lambda \approx 0{,}5 \qquad (2)$$

Da die maximale Doppelbrechung $\Delta n \cdot d$ bei dieser DHF-Zelle $\lambda/2$ beträgt, kann man eine solche DHF-Zelle auch eine „$\lambda/2$"-DHF-Zelle nennen. Da $\Delta n$ zudem typischerweise zwischen 0,1 und 0,2 liegt, folgt, dass die optimale Flüssigkristall-Schichtdicke d zwischen 1,4 und 2,8 $\mu$m liegen muss. Die Flüssigkristall-Schichtdicke d ist somit sehr klein. Solch kleine Elektrodenabstände machen - wie bereits erwähnt - die Herstellung von DHF-Anzeigen sehr schwierig, dies insbesondere hinsichtlich der Gefahr von Kurzschlüssen und der Notwendigkeit, bei der Herstellung solcher DHF-Zellen extreme Reinraumbedingungen und enge Toleranzen für die Schichtdicke d einzuhalten.

Die heute in Betrieb stehenden und zum Beispiel zur Herstellung von Flüssigkristall-Anzeigezellen des Typs TN (Twisted Nematic), SBE (Super Birefringence Effect) oder OMI (Optical Mode Interference) bestimmten Einrichtungen erlauben darüber hinaus lediglich die Bildung von 5 - 6 $\mu$m dicken Flüssigkristallschichten. Die Herstellung von DHF-Anzeigen mit einer Schichtdicke d von 1,4 - 2,8 $\mu$m setzt also zudem eine neue Produktionsanlage mit einem enormen technischen Aufwand voraus. Die Möglichkeit der Herstellung einer 5 $\mu$m DHF-Anzeige ist also ein sehr wichtiger Schritt auf dem Wege zur Kommerzialisierung der DHF-Technologie.

Die erfindungsgemässen DHF-Zelle basiert nun auf dem in den Figuren 5 und 6 sowie in Gleichung (1) beschriebenen Verhalten einer DHF-Zelle. Der Hauptvorteil dieser DHF-Zelle ist, dass diese wesentlich grössere Elektrodenabstände aufweisen kann, als die bis heute bekannt gewordenen DHF-Zellen.

Erfindungsgemäss handelt es sich hierbei um eine „negativ-Kontrast"-DHF-Zelle, d.h. die entsprechende Anzeige ist hell bei U=0 und dunkel bei |U|>0. Dies wird dadurch erreicht, in dem man für $\beta$ 45° wählt. Das bedeutet, dass bei einer DHF-Zelle der vorstehend beschriebenen Art die Helixachse mit der Polarisationsrichtung eines Polarisators einen Winkel von 45° einschliesst. Bei Spannung U=0 ist dann $\gamma$=45° (Allgemein gilt: $\gamma$=45°+$\alpha$(U)) und der erste Faktor der Gleichung (1) gleich eins. Ein weiteres charakteristisches Merkmal einer erfindungsgemässen DHF-Zelle ist durch die Beziehung der Doppelbrechung $\Delta n$ zu der vom Licht im Flüssigkristall zurückgelegte Strecke $d_{eff}$ gegeben. Für diese Beziehung gilt nämlich noch folgende Bedingung: 200nm<$\Delta n \cdot d_{eff}$<350nm.

Das erste Ausführungsbeispiel ist nun eine DHF-Zelle der vorstehend beschriebenen Art. Dafür gilt also, dass $d_{eff}$=d ist.

Bei diesem Beispiel ist ferner die Doppelbrechung $\Delta n$ und die Flüssigkristall-Schichtdicke d so gewählt, dass $\Delta n(U=0,\lambda) \cdot d / \lambda = 0{,}5$ gilt, und zwar für $\lambda = 560$ nm.

Im Unterschied zur Gleichung (2), die sehr ähnlich aussieht, wird hier der Ausdruck $\Delta n \cdot d / \lambda$ für die Spannung U=0 festgelegt.

Wie nun aus der Figur 6 ersichtlich ist, ist bei grossem Schaltwinkel ($\alpha > 30°$) der Wert für $\Delta n$ 2 bis 3 mal kleiner als bei maximal angelegter Spannung. Daher kann die so konfigurierte DHF-Anzeige beispielsweise um einen Faktor 2 oder 3 dicker sein, als bekannte DHF-Anzeigen, was - wie vorstehend bereits beschrieben - die Herstellung von DHF-Anzeigen wesentlich vereinfacht. Wichtig ist dabei, dass bei der vorstehend beschriebenen Wahl der Zell-Konfiguration beide Faktoren in Gleichung (1) mit zunehmender Spannung |U| kleiner werden. So kann eine starke Reduktion der Transmission T erreicht werden, auch wenn der Schaltwinkel nicht genau $\pm$ 45° beträgt.

Handelt es sich, wie im hier vorliegenden Fall, um eine farbige DHF-Anzeige, so ist noch folgendes zu berücksichtigen. Der erste Faktor in der Gleichung (1) ist für alle drei Grundfarben gleich. Daher wird auch die maximale Transmission T für alle Grundfarben bei derselben Spannung erreicht, d.h. die DHF-Zelle durchläuft als Funktion der Spannung U die Zustände Weiss, Grau und Schwarz, zeigt also keine Färbung. Wie vorstehend dargelegt, gilt dies nicht mehr für grosse Kippwinkel $\theta$ ($\theta > 35°$) bzw. für grosse Schaltwinkel $\alpha$ ($\alpha > 30°$). Der Faktor $\sin^2(2\gamma)$ der Gleichung (1) dominiert bei kleinen Spannungen, bei grösseren Spannungen wird aber die Spannungsabhängigkeit von $\Delta n$ so stark, dass dort der zweite Faktor $\sin^2(\pi \cdot \Delta n \cdot d / \lambda)$ die Transmission T wesentlich mitbestimmt. Da dieser Faktor jedoch wellenlängenabhängig ist, wird der Dunkelzustand der DHF-Anzeige für die verschiedenen Farben bei verschiedenen Spannungen erreicht. Das hat zur Folge, dass die Ansteuerspannungen für die einzelnen Grundfarben einzeln angesteuert werden müssen.

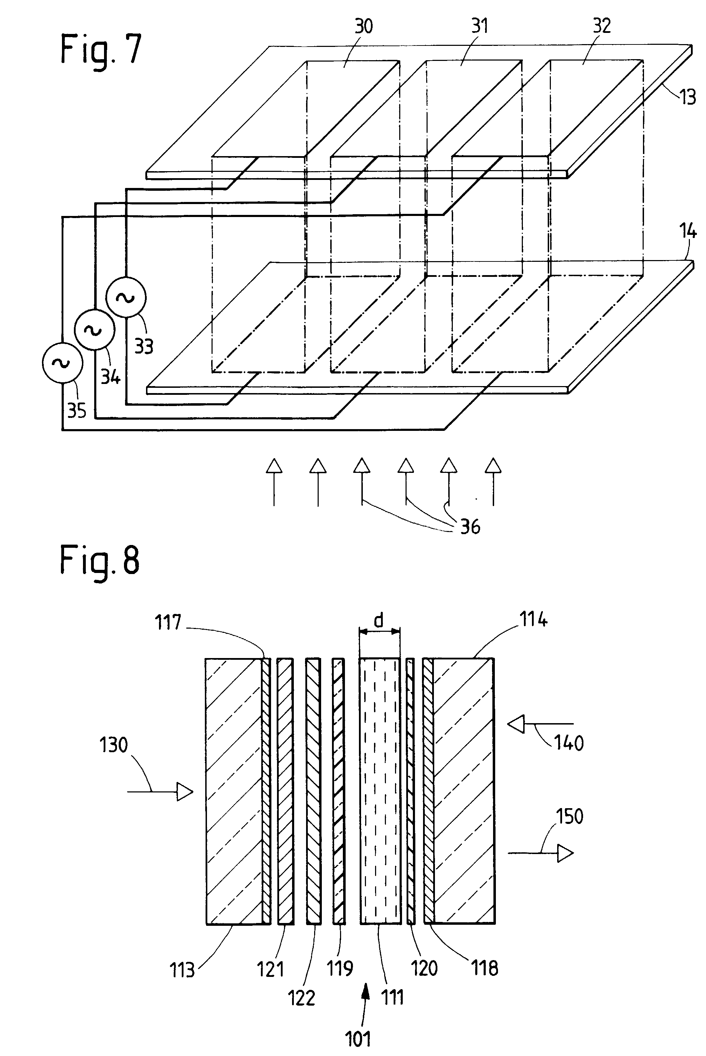

Die Figur 7 zeigt nun schematisch den Aufbau eines Bildpunktes einer farbigen DHF-Zelle. Wieder sind die beiden die Flüssigkristallschicht einschliessenden Platten mit 13 und 14 bezeichnet. Die nicht gezeichnete Helixachse ist 45° zu einem der beiden ebenfalls nicht dargestellten Polarisatoren. Die zur Darstellung eines Bildpunktes dienenden Zellen-Segmente sind in die drei Farbpixel mit je einer Unterelektrode 30, 31 und 32 für die Farben Rot, Grün und Blau eingeteilt. Die Treiberelektronik, in der Fachsprache auch als Aktivmatrix bezeichnet, setzt sich erfindungsgemäss aus drei unabhängig voneinander steuerbaren Spannungsquellen 33, 34 und 35 zusammen. Der auf die DHF-Zelle auftreffende Lichtstrahl ist durch die Pfeile 36 angeben. Erfindungsgemäss sollen nun die mit den Spannungsquellen 33, 34 und 35 erzeugbaren Signale unterschiedliche Spannungswerte durchlaufen, wobei gilt: $U_{max,Rot} > U_{max,Grün} > U_{max,Blau}$. Liegen die Maximalspannungen $U_{max,Rot}$, $U_{max,Grün}$ und $U_{max,Blau}$ gleichzeitig an den entsprechenden Farbpunkten, den sogenannten Farbpixeln an, so soll dann der durch die drei Farbpixel gebildete Bildpunkt maximal dunkel und nahezu schwarz sein. Bei $U_{max,Rot,Grün,Blau}$ ist die Gangdifferenz der DHF-Anzeige für die entsprechenden Farben gerade etwa gleich der Wellenlänge, so dass man diese Anzeige dann auch eine «negativ-Kontrast"-λ-DHF-Anzeige nennen kann.

Anstelle der drei unterschiedlichen Ansteuerspannungen kann auch die Zelldicke d an den Farbpixeln verschieden gewählt werden. Dies kann beispielsweise dadurch erreicht werden, indem man die Farbfilter verschieden dick ausbildet, wobei dann das blaue Filter am dicksten und das rote Filter am dünnsten gewählt wird.

Neben dem wichtigsten Vorteil, der grösseren Schichtdicke, hat diese «negativ-Kontrast"-λ-DHF-Anzeige auch noch den folgenden Vorzug: Ihr Dunkelzustand ist deutlich weniger empfindlich auf Wandorientierungsfehler als der von λ/2-DHF-Anzeigen der vorstehend beschriebenen Art, deren Dunkelzustand bei α=0 auftritt. Bei γ=0 führen nämlich kleine Schwankungen der He-lixorientierung zu Regionen mit y<0, d.h. zu einer unerwünschter Transmission und damit zu einer Verringerung des Kontrastes der λ/2-DHF-Anzeige. Im Gegensatz dazu werden bei der «negativ-Kontrast"-λ-DHF-Anzeige beide Faktoren der Gleichung (1) sehr klein, was die Empfindlichkeit auf Variationen des ersten Faktors, der vor allem von Orientierungsschwankungen beeinflusst wird, stark reduziert. Auch eine schlecht orientierte «negativ-Kontrast"-λ-DHF-Anzeige weist daher einen hohen Kontrast auf. Da der Hellzustand wenig empfindlich auf Orientierungsfehler ist, resultiert daraus ein stark verbessertes und durch Zellparameter wenig beeinträchtigtes Verhalten von «negativ-Kontrast"-λ-DHF-Anzeigen.

Ein weiterer Vorteil der «negativ-Kontrast"-λ-DHF-Anzeige hängt mit der Art der elektrischen Ansteuerung von DHF-Zellen zusammen. Um eine Aufladung Der DHF-Zelle und die Erzeugung von damit verbundenen «Geisterbildern" bei Videoanzeigen zu vermeiden, wird die an der DHF-Zelle angelegte Spannung periodisch umgepolt. Dies kann effizient dadurch erreicht werden, in dem vor dem eigentlichen Bildsignal ein grosser Resetpuls mit der Polarität des nächsten Bildes angelegt wird. Die «negativ-Kontrast"-λ-DHF-Anzeige hat nun den Vorteil, dass der Reset-Zustand dunkel ist. Dies erlaubt die Verwendung von relativ langen Resetpulsen, ohne dass der Kontrast der DHF-Anzeige darunter leidet.

Im übrigen reduziert die Verwendung von zueinander abgestuften Ansteuerspannungen für die Farbpixel der drei Grundfarben deutlich den Energieverbrauch einer DHF-Zelle. Dies ist insbesondere für tragbare elektronische Geräte wie Laptops, Videokameras und Kleinbildfernsehern von Vorteil.

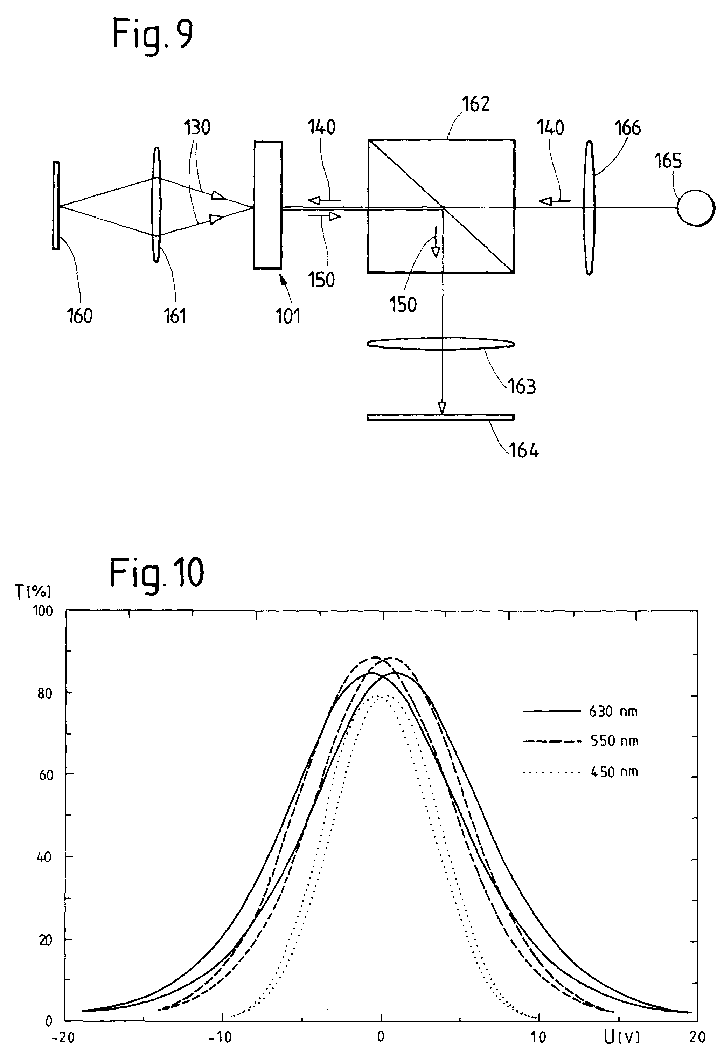

DHF-Zellen der erfindungsgemässen Art können auch in einem Projektions-Display eingesetzt werden. So ist ein zweites Ausführungsbeispiel, nämlich eine für ein Projektions-Display verwendbare DHF-Zelle in der Figur 8 schematisch dargestellt. Die an sich bekannte Funktionsweise des entsprechenden Displays zeigt die Figur 9.

Die in der Figur 8 als ganzes mit 101 bezeichnete DHF Zelle besitzt wie die vorstehend beschriebene DHF-Zelle 10 eine $S_c{}^*$-Schicht 111 mit einer Schichtdicke d, die zwischen zwei zueinander parallelen Glasplatten 113 und 114 angeordnet ist. Auf ihren der Flüssigkristallschicht 111 zugewandten Oberflächen weisen die Platten 113 und 114 durchsichtige Elektroden 117 und 118 auf, welche die üblichen, zur Darstellung von Zeichen oder Bildpunkten bestimmten Elektrodensegmente bilden.

Beidseits der Flüssigkristallschicht 111 sind noch je eine Orientierungsschicht 119 bzw. 120 angeordnet, so wie das be reits vorstehend beschrieben ist. Wie aus der Figur 8 zudem ersichtlich ist, ist die DHF-Zelle 101 für diesen besonderen Zweck noch mit einem lichtabsorbierenden Photoleiter 121 und einem dielektrischen Spiegel 122 versehen, so wie das für reflektierende Projektions-Displays bekannt ist.

Im Betriebszustand ist die DHF-Zelle 101 so angeordnet, dass das Schreibelicht 130 durch die Glasplatte 113 und das Leselicht 140 durch die Glasplatte 114 hindurchtritt. Beim Betrieb des Projektions-Displays wird das Bild 160 über die Linse 161 auf den Photoleiter 121 der DHF-Zelle 101 projiziert und von diesem absorbiert. Das Schreibelicht 130 erzeugt dabei auf dem Photoleiter 121 eine Modulation der Leitfähigkeit, die der Bildinformation entspricht. Mit Hilfe der an den Elektroden 117 und 118 angeschlossenen Spannungsquelle wird diese Modulation in eine Spannungsmodulation über dem Flüssigkristall umgesetzt, worauf letzterer entsprechend deformiert wird.

Gleichzeitig wird das der Bildwiedergabe dienende Leselicht 140 durch einen Strahlteiler 162 polarisiert und am dielektrischen Spiegel 122 reflektiert. Das so reflektierte Leselicht trifft dann als Licht mit modulierter Polarisation erneut auf den Strahlteiler 162 auf. Dieser wirkt für den reflektierten Lichtstrahl als Analysator und reflektiert nur die zum einfallenden Licht senkrecht stehende Polarisationskomponente, d.h. der Strahlteiler hat die Funktion von gekreuzten Polarisatoren. Das vom Strahlteiler 162 reflektierte Licht wird schliesslich mit einer geeigneten, eine Linse 163 aufweisenden Optik auf die Leinwand 164 projiziert.

Aus dem vorstehend beschriebenen Funktionsablauf geht nun hervor, dass der von der Lichtquelle 165 erzeugte und durch die Linse 166 und den Strahlteiler 162 auf die DHF-Zelle 101 auftreffende Lichtstrahl die doppelbrechende Flüssigkristallschicht 111 zweimal durchquert, so wie das an sich für alle reflektierenden Anzeigen der Fall ist, nämlich als Leselicht 140 und als moduliertes Licht 150. Demzufolge ist die vom Licht im Flüssigkristall zurückgelegte Strecke $d_{eff}$ doppelt so gross wie die Dicke d der Flüssigkristallschicht, also 2d. Im übrigen kann bei dieser Vorrichtung die Lichtquelle 165 wesentlich intensiver sein als das Schreibelicht 130, so dass die gesamte Anordnung dann auch als Lichtverstärker wirkt.

Es sei an dieser Stelle noch darauf hingewiesen, dass die vorstehend beschriebenen erfindungsgemässen DHF-Zellen bzw. Anzeigevorrichtungen nur eine Auswahl von mehreren möglichen Ausführungsformen von DHF-Zellen und elektro-optischen Vorrichtungen darstellen und dass eine erfindungsgemässe DHF-Zelle bzw. DHF-Anzeige nicht nur als Direktsicht-Display oder reflektierendes Projektions-Display sondern ganz allgemein als Reflexions-Display oder als sogenanntes «Head Mounted Display" ausgebildet sein kann.

Ferner können farbige DHF-Anzeigen der erfindungsgemässen Art anstelle der dreiteiligen Segmentierung der Elektroden auch einteilige Elektroden-Segmente aufweisen, welche dann ihrerseits innerhalb eines vorgegebenen Zeitintervalles alternierend für das rote, grüne und blaue Licht angesteuert werden. In diesem Fall wird ein Bildpunkt dadurch erzeugt, in dem man die zu einem einzelnen Segment gehörenden Signale über dieses zeitliche Intervall mittelt.

Schliesslich können auch noch andere optische und elektro-optischen Vorrichtungen mit DHF-Zellen der erfindungsgemässen Art ausgerüstet sein. So zum Beispiel optische Schalter, wie sie etwa aus «Applied Optics 27, 1727 (1988), K.M. Johnson et al." bekannt sind, oder Vorrichtungen zur Bild- bzw. Mustererkennung. Letztere sind aus , «Applied Optics 5, 1248 (1966), C.S. Weaver et al." oder «Optics Communications 76, 97 (1990), D.A. Jared et al." bekannt und dienen zum Beispiel dazu, Fingerabdrücke von Personen mit einer Bibliothek von Fingerabdrücken zu vergleichen.

Im folgenden sind noch weitere Daten und Angaben zu den vorstehend genannten Ausführungsbeispielen angegeben.

Als für den erfindungsgemässen Zweck verwendbare Flüssigkristallmischung eignet sich die Flüssigkristallmischung FLC 10827 der Firma Rolic AG, Basel. Die physikalischen Eigenschaften dieser Mischung zeigt die Tabelle I und die chemische Zusammensetzung die Tabelle II.

Tabelle I:

| Physikalischen Daten der Testmischung FLC 10827 | | |
|---|---|---|
| Phasenfolge | isotrop-108°C-cholestrisch-74°C-$S_c^*$ | |
| spontane Polarisation | 97 | $nC/cm^2$ |
| Kippwinkel θ | 42,5 | ° |
| Helixganghöhe | <200 | nm |

Tabelle II: Chemische Zusammensetzung der Testmischung

| Konzentration g/g | Struktur | Die Konfiguration der chiralen Seitenkette ist S, die der Dioxane: |
|---|---|---|
| 0,2167 | | |
| 0,1150 | | |
| 0,0999 | | |
| 0,0972 | | |
| 0,0929 | | |
| 0,1084 | | |
| 0,1079 | | |
| 0,0307 | | |
| 0,0036 | | |
| 0,0031 | | |
| 0,0036 | | |
| 0,0174 | | |
| 0,0174 | | |
| 0,0087 | | |
| 0,0087 | | |
| 0,0434 | | |
| 0,0262 | | |

Die in den Laboruntersuchungen verwendeten Testzellen sind mit durchsichtigen Indium-Zinn-Oxyd Elektroden beschichtet und mit einer isolierenden Ionenblockierungsschicht und einer geriebenen Polyimidschicht mit parallelen Reibrichtungen versehen. Die Zellen wurden bei 100°C durch Kapillarwirkung gefüllt und langsam bei angelegtem elektrischen Feld (10V/µm Rechteck, von 10..1000Hz variiert) abgekühlt. Letzteres ist fakultativ, kann jedoch den Kontrast verbessern.

Erstes Ausführungsbeispiel:

Die Schichtdicke d wurde bei dieser DHF-Zelle so gewählt, dass alle drei Farben bei U=0 nahezu dieselbe maximale Transmission aufweisen.

Die Figur 10 zeigt die Transmisssions-Spannungskurven einer 5.3µm dicken «negativ Kontrast"-λ-DHF-Zelle für blaues, grünes und rotes Licht. Die Transmissionswerte dieser Kurven sind dabei durch ein Normspektrum dividiert. Das Normspektrum ist die Transmission derselben Zelle, aufgenommen mit zueinander parallel positionierten Polarisatoren und Helixachse. Wichtigstes Merkmal dieser Kurven ist, dass das Minimum für die Farbe Rote (630nm) bei etwa ±19V, für Grün (550nm) bei etwa ±15V und für Blau (450nm) bei etwa ±10V erreicht wird.

Optischen Schalter mit einer DHF-Zelle der erfindungsgemässen Art

Optische Schalter mit einer DHF-Zelle der erfindungsgemässen Art haben gegenüber bekannten ferroelektrischen Schaltern den Vorteil, dass der Schalter lediglich durch Änderung der an der Zelle angelegten Spannung auf eine andere Wellenlänge umprogrammiert werden kann und dass durch periodisches Umpolen ein gleichspannungsfreier Betrieb möglich ist.

Vorrichtung zur Bild- und Mustererkennung

Die Bild- und Mustererkennung mittels einer erfindungsgemässen DHF-Zelle beruht hierbei im wesentlichen auf der JFT(Joint Fourier Transform)-Technik, bei welcher zwei Linsen zur Fouriertransformation bestimmt sind. Hierbei werden zwei nebeneinander liegende Bilder durch eine erste Linse fouriertransformiert, diese Fouriertransformation mit einer DHF-Zelle der erfindungsgemässen Art, zum Beispiel einer reflektiven SLM-DHF-Zelle (SLM steht für Spacial Light Modulator), sichtbar gemacht und das so erhaltene Bild mittels einer zweiten Linse erneut fouriertransformiert. Dadurch erhält man eine Kreuzkorrelationsfunktion der beiden Bilder, welche zu einem hellen Punkt wird, wenn die beiden Bilder identisch sind. Diese optische JFT-Methode hat nun gegenüber einer elektronischen Bildverarbeitung den wesentlichen Vorteil, dass sie sehr schnell ist.

**Patentansprüche**

1. Flüssigkristalline Anzeige-, Schalt- oder Bildverarbeitungsvorrichtung mit einer eine ferroelektrische, chiral-smektische, doppelbrechende Flüssigkristallschicht (11) enthaltenden Zelle (10), mindestens einem Polarisator (15,16) und elektrischen Steuermitteln zur Erzeugung eines elektrischen Feldes in der Flüssigkristallschicht (11), wobei

   - die Zelle (10) ein Paar die Flüssigkristallschicht (11) einschliessender Platten (13,14) besitzt, von denen jede mit einer die Moleküle der Flüssigkristallschicht (11) ausrichtenden Oberflächenstruktur und einer Elektrode (17,18) zur Erzeugung des elektrischen Feldes versehen ist,
   - die Zelle (10) und wenigstens eine Elektrode (17) zur Darstellung von Bildpunkten in Segmente aufgeteilt sind,
   - die elektrischen Steuermittel so ausgebildet sind, um beim Betrieb der Anzeigevorrichtung (10) für jedes Segment mindestens eine zur Modulierung der Lichttransmission dienende Ansteuerspannung zu erzeugen, die in einem im voraus durch U=0 und U=|U_{max}| begrenzten Spannungsbereich liegt, und
   - die Flüssigkristallschicht (11) einen von der angelegten Spannung abhängigen Schaltwinkel $\alpha(U)$ aufweist, dessen Maximalwert $\alpha(U=|U_{max}|)$ gleich dem Winkel der optischen Achse zwischen den Spannungen U=0 und U=|U_{max}| ist,

   dadurch gekennzeichnet, dass beim Betrieb der Vorrichtung der Schaltwinkel $\alpha(U=|U_{max}|)$ mindestens 30° beträgt, dass die Flüssigkristallschicht so angeordnet ist, dass ihre Helixachse mit der Polarisationsrichtung eines Polarisators einen Winkel von 45° bildet und dass bei U=0 folgende Beziehung für die Doppelbrechung $\Delta n$ und die vom Licht im Flüssigkristall zurückgelegte Strecke $d_{eff}$ gilt: $200nm < \Delta n \cdot d_{eff} < 350nm$.

2. Anzeigevorrichtung nach Anspruch 1, mit Farbfiltern (19,20,21) zur Erzeugung eines roten, grünen und blauen Lichtstrahles aus weissem Licht, wobei die Anzeigezelle (10) und wenigstens eine Elektrode (17) zur Darstellung von farbigen Bildpunkten in Segmente mit je drei Farbpixeln für die Grundfarben Rot, Grün und Blau aufgeteilt sind und die Elektroden-segmente je drei Unterelektroden (17a,17b,17c) umfassen, von denen je eine einem Farbpixel zugeordnet ist, dadurch gekennzeichnet, dass die Unterelektroden (17a,17b,17c) eines jeden Elektrodensegmentes an je einer separaten Spannungsquelle mit den Spannungen $U_{Rot}$, $U_{Grün}$ und $U_{Blau}$ angeschlossen sind, wobei die Spannungsbereiche für die roten, grünen und blauen Farbpixel unterschiedlich gross sind, und wobei der Spannungsbereich für die Grundfarbe Rot am grössten und derjenige für die Grundfarbe Blau am kleinsten ist.

3.  Anzeigevorrichtung nach Anspruch 1 oder 2, gekennzeichnet durch eine zur Direktsicht bestimmten Anzeigezelle (10) mit einer Flüssigkristallschicht (11) der Dicke d, die im Betriebsszustand gleich $d_{eff}$ ist.

4.  Anzeigevorrichtung nach Anspruch 3, dadurch gekennzeichnet, dass die Flüssigkristallschicht 2,8 - 6 µm dick ist.

5.  Anzeigevorrichtung nach Anspruch 1 oder 2, gekennzeichnet durch eine zur Lichtreflexion bestimmten Anzeigezelle (101) mit einer Flüssigkristallschicht (111) der Dicke d, die im Betriebsszustand gleich ½·$d_{eff}$ ist.

## Fig.1

## Fig. 2

Fig. 3

Fig. 4

## Fig. 5

## Fig. 6

Fig. 7

Fig. 8

## Fig. 9

## Fig. 10

| | Europäisches Patentamt | **EUROPÄISCHER RECHERCHENBERICHT** | Nummer der Anmeldung EP 97 81 0357 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A | ABDULHALIM I ET AL: "ELECTRICALLY AND OPTICALLY CONTROLLED LIGHT MODULATION AND COLOR SWITCHING USING HELIX DISTORTION OF FERROELECTRIC LIQUID CRYSTALS" MOLECULAR CRYSTALS AND LIQUID CRYSTALS (INC. NONLINEAR OPTICS ), Bd. 200, 1.Mai 1991, Seiten 79-101, XP000258405 * Seite 86, letzter Absatz - Seite 88, Absatz 1; Abbildungen 2,10,12 *<br><br>--- | 1,3,4 | G02F1/141 |
| A | FÜNFSCHILLING J ET AL: "FAST RESPONDING AND HIGHLY MULTIPLEXIBLE DISTORTED HELIX FERROELECTRIC LIQUID-CRYSTAL DISPLAYS" JOURNAL OF APPLIED PHYSICS, Bd. 66, Nr. 8, 15.Oktober 1989, Seiten 3877-3882, XP000073911 * Seite 3878, rechte Spalte, Absatz 2; Abbildung 1 *<br><br>--- | 1,3,4 | |
| A | EP 0 686 957 A (CASIO COMPUTER CO LTD) 13.Dezember 1995 * Spalte 8, Absatz 3 - Spalte 11, Absatz 1; Abbildungen 1,3; Beispiel 4 *<br><br>--- | 1-3 | **RECHERCHIERTE SACHGEBIETE (Int.Cl.6)**<br><br>G02F |
| A,D | EP 0 309 774 A (HOFFMANN LA ROCHE) 5.April 1989 * Seite 5, letzter Absatz - Seite 6, Absatz 2; Abbildung 1 *<br><br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 9.September 1997 | Wongel, H |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
......................................................................
& : Mitglied der gleichen Patentfamilie, übereinstimmendes Dokument

EPO FORM 1503 03.82 (P04C03)